# EUROPEAN PATENT SPECIFICATION

(11) **EP 1 684 898 B1**
(45) Date of publication and mention of the grant of the patent: **11.01.2012**
(21) Application number: 04800353.7
(22) Date of filing: 18.11.2004
(51) Int. Cl.: B01J 20/24, B01J 20/32, C02F 1/62

(54) **ADSORPTION MATERIAL AND PROCESS FOR ITS PRODUCTION**
ADSORPTIONSMATERIAL UND HERSTELLUNGSVERFAHREN DAFÜR
MATERIAU D'ADSORPTION ET PROCEDE DE PRODUCTION ASSOCIE

(30) Priority: 19.11.2003 SE 0303072
(43) Date of publication of application: 02.08.2006
(73) Proprietor: Chelos AB, 75142 Uppsala (SE)
(72) Inventor: LINDGREN, Göran, S-740 10 ALMUNGE (SE)
(74) Representative: Holmberg, Martin Tor
(86) International application number: PCT/SE2004/001691
(87) International publication number: WO 2005/049197

(56) References cited:
- EP-A2- 0 992 283
- WO-A1-91/19675
- US-A- 4 178 438

## Description

The present invention concerns adsorption materials, and in particular a derivatised, cellulosic material for the adsorption of heavy metal ions, as well as a process for its production.

### Background

In all situations where metals are handled, be it mining, refining, working or recycling, to mention a few examples, problems with contaminated gases and liquids arise. Examples of contaminated gases include, but are not limited to flue gases, dust and vapours. Examples of contaminated liquids include, but are not limited to, condensates, leachates, rinse and wash waters, runoff waters, industrial and municipal waste waters etc. The combustion of fossil fuels, bio fuels and waste, also releases metal compounds.

The so-called heavy metals constitute a particular problem. Many of these are harmful to man and the environment already at low concentrations. When released into the biosphere, the heavy metals are difficult to recover and they tend to remain a problem for very long periods of time, in particular as many heavy metals are capable of accumulating, for example in living tissue and in the food chain.

Metals having a density above 5 gr per cubic centimetre are often referred to as heavy metals. Many elements belong to this group, but there is a focus on the following in the fields of environmental protection and health: arsenic (As), lead (Pb), cadmium (Cd), cobalt (Co), cupper (Cu), chromium (Cr), mercury (Hg), nickel (Ni), tin (Sn), vanadium (V), and zinc (Zn). Remaining heavy metals only exceptionally appear in concentrations, so high that negative effects would occur. Arsenic is usually considered as one of the environmentally dangerous heavy metals, although it strictly speaking is no metal but a metalloid element.

Examples of point sources releasing heavy metals and heavy metal ions include the mining and metal industry, dentists' offices, the electronics and integrated circuit industry, waste management and recycling, thermal power plants, waste combustion facilities etc. Also the automobile traffic and transportation sector is a source of heavy metal pollution. A common feature in all these cases is that the heavy metals and/or ions sooner or later appear in water, and often in low concentrations, making the recovery very difficult.

The handling of heavy metal containing waste, and in particular aqueous waste streams, would be greatly simplified if the heavy metals could be concentrated and removed, e.g. using an adsorption material binding metal ions. Said adsorption material could then be collected for landfills, combustion or recycling.

WO 03/011453 discloses adsorber materials made of renewable raw materials from the areas of agriculture, forestry, fish farming, paper industry and foodstuffs industry. Tree rind or bark derivatised with polyamine is mentioned as one example.

WO 91/19675 concerns an adsorbent material based on cloth or fabric. The fabric is pre-treated with an alkali, washed and treated with a high molecular weight polyethyleneimine. This is then fixed using a crosslinking agent, such as epichlorohydrin.

Wang et al. (Chemical Abstracts 137:249300) describes chemically modified bark crosslinked with formaldehyde and epichlorohydrin, resulting in improved adsorption of cupper ions.

In the light of the prior art, it still remains to develop improved adsorption materials for the adsorption of metal ions, and to develop new processes for their production. One aim underlying the present invention is to make available an adsorption material exhibiting improved performance, based on readily available raw materials, in particular a raw material, which is available in large volumes and to a competitive price.

Another aim is to make available an adsorption material suitable for combustion in a process where the adsorbed metal ions can be recovered from flue gas condensate and ashes.

Yet another aim is to develop and improve known processes for derivatisation of cellulosic carriers or matrices, with the aim of creating new, superior adsorption materials.

Further problems underlying the invention, aims of the inventor, and the corresponding solutions, will become apparent at a closer study of the description and examples.

### Summary of the invention

The above mentioned aims, as well as the problems remaining in the light of the prior art, have surprisingly been solved by the present inventor by making available an improved adsorption material and a process for its production, as outlined in the attached claims. According to the invention, a raw cellulosic material containing pseudo functional and functional groups is subjected to a chemical pre-treatment involvement an aqueous bromine solution in neutral environment, followed by the addition of polyethyleneimine. The resulting adsorption material has superior qualities with regard to the retention of the adsorbed ions, i. e. the resistance to leakage.

### Description

The inventor has surprisingly shown that an adsorption material with improved properties is achieved on the basis of a material containing pseudo functional and functional groups, following a chemical pre-treatment and the addition of polyethyleneimine and stabilisation thereof. The adsorption material exhibits improved binding of the metal ions, and an increased resistance to leaching.

It is known that bark, and in particular pine bark, contains considerable amounts of olefinic substances, both in its macro- and microscopic pores. Among these olefinic substances, aromatic compounds substituted with allyl groups and aromatic aldehydes, respectively, can be mentioned. In addition to these, bark is known to contain fats (fatty acid glyceryl esters) and waxes. This leads to hydrophobic interaction, which explains why bark is useful in the cleaning of oil spills.

It is also known that untreated bark is capable of adsorbing certain heavy metals to a limited extent. The adsorption is however not stable, and the presence of so-called hard metal ions, mainly calcium, present e.g. in flue gas condensates, negatively influences the overall adsorption properties of bark.

It is also known that cellulosic compounds, following a basic treatment, can electrostatically adsorb polyethyleneimine. See e.g. WO 91/19675 mentioned above. This association between the carboxyl groups and the amino groups in polyethylene imine is however sensitive to changes in pH and ionic strength, and thus not stable.

The chemical pre-treatment mentioned above is conducted at neutral pH, and involves subjecting the raw material to bromine / water. Bromine / water is a frequently encountered reagent, commonly used in testing unsaturated hydrocarbons. A person skilled in the art is familiar with this reagent, and can either produce using liquid bromine and water, or sodium bromide, or obtain it from a supplier of laboratory chemicals.

The addition is conducted at neutral pH, by adding an effective amount of bromine / water to the cellulosic raw material. By this treatment, the pseudo-functional allylic groups will react spontaneously, evidenced by the disappearance of the yellow colour of the bromine water. This colour change is also a good indication of the amount of bromine / water needed for the particulate cellulosic raw material in question. The resulting bromohydrin groups are reactive towards nucleophiles, and capable of reacting with the polyethylene imine to be added in basic environment.

Following the bromine / water treatment, polyethylene imine is added.

The product is then stabilised using a crosslinking agent, preferably epichlorohydrin. The use of epichlorohydrin is well known, but has in this application surprisingly been found to have a dual effect. On the one hand, a substitution reaction takes place, involving the amino group of the chelating agent, followed by the formation of a glycerol group during the subsequent hydrolysis. This gives increased hydrophilicity to the final product. On the other hand, bridges between the covalently bound polyethylene chains and the remaining free polyethyleneimine chains are formed, further improving the properties of the product. Further, at basic pH epichlorohydrin may also react with the hydroxy groups of the phenols and form covalent bonds with polyethylene imine.

Preferably, the treatment is performed in the presence of 5 - 20 % base, and during reaction time of about 8 hours, most preferably in the presence of about 10 % base.

According to an embodiment of the invention, the cellulosic raw material is tree bark in particulate form. A suitable source of bark is the chips or bark powder used in the cleaning of oil spills. Preferably, dried and sieved bark is used, in order to obtain a desired particle size range, as well as to remove excessively small particles (bark powder or bark dust). Preferably, the bark is bark from spruce or pine, most preferably pine. Most preferably, the bark has a particle size in the interval of about 1 mm to about 10 mm, in order to obtain a satisfactory flow rate through the material when in use.

According to another embodiment, the cellulosic raw material is particulate wood, e.g. wood chips, sawdust, or the like. The particle size is preferably in the interval of about 1 mm to about 10 mm, depending on the material in question and considering the flow rate.

A skilled person will understand that the particle size, and particle size distribution can vary, depending on the material used, and the desired flow rate through the adsorption material when in place in filters.

According to yet another embodiment, the cellulosic raw material is taken from the first basic cooking during the production of pulp and paper. In such embodiments, no additional pre-treatment except for the bromine / water treatment, needs to be performed. The bromine treatment is then performed by adding a sufficient amount of bromine / water to the pulp, and incubating the mixture for 10 min. The amount is easily determined by observing the colour change.

Examples of other cellulosic raw materials containing pseudofunctional and functional groups comprise agricultural products and residual products, such as straw, hay, and cereals. Another cellulosic raw material is peat. These raw materials are treated as outlined above, with necessary modifications with regard to particle size, treatment and handling, which modifications are obvious to a person skilled in the art.

The stability of the adsorption material is an important advantage. It is of uttermost importance that the chelating agent used, in the present invention polyethylene imine, is covalently bound to its carrier in order to avoid leakage. The pre-treatment involving bromine solution leads to the formation of reactive bromohydrine groups, which bind covalently to the amino groups of the polyethyleneimine. Further, the basic treatment results in a degree of ring opening of the cellulose, leading to the formation of aldehyde groups. These are to an extent oxidised to carboxyl groups.

The addition of an amino containing chelating agent leads to, in addition to the important covalent binding, also to the formation of Schiff's bases with the aldehyde groups, both those originally present in the bark, and those formed during hydrolysis. Further, electrostatic binding (ion exchange) via the carboxylic groups is achieved. The Schiffs bases and ionic groups are however reversible and therefore sensitive to changes in pH and ionic strength.

In summary, the adsorption material according to the invention has many advantages. It is based on a raw material which is relatively abundant and inexpensive, it is easy to store and handle, and it exhibits superior capability to absorb heavy metals, and it is resistant to leakage, an important factor in the long term use or in the storage of used adsorption material.

According to an embodiment of the present invention, the adsorption material is packed in units, which can be used one-by-one, or assembled into larger filter beds, or used in filter constructions. Preferably, the adsorption material is packed in units of 100 g, 200 g, 500 g, 1 kg, 2kg, 5 kg, 10 kg, 20 kg or 40 kg dry material. In the alternative, the dry material is packed in amounts, which, when wetted, achieve a weight of 100 g, 200 g, 500 g, 1 kg, 2kg, 5 kg, 10 kg, 20 kg or 40 kg.

A unit mentioned above comprises an amount of the adsorption material, enclosed in a material which is permeable to water but which essentially retains the adsorption material inside the enclosure. Examples include mesh or nets, permeable membranes or perforated membranes. These can be of synthetic or organic materials, preferably of a biodegradable and combustible material. Suitable thermoplastic and organic fibres can be used to form a mesh or net to enclose the adsorption material.

According to the invention, said units can have a substantially rectangular shape, such as a filled bag or sack, or a substantially cylindrical shape, such as a sausage-like unit. Under all circumstances, care is to be taken when filling and when using the units, so that the liquid to be treated flows evenly over the entire cross section of the filter unit.

According to an embodiment of the invention, a filter construction consists of a filter housing, capable of receiving one or more filter units as described above., an inlet and an outlet for receiving the aqueous solution to be treated, and an inlet/outlet for replacing the filter units, or means for detaching and replacing the entire filter.

Preferably said filter construction is such, that the liquid to be treated is allowed to enter the filter construction and to settle before reaching the units containing the adsorption material, so that the liquid meets the filter material over its entire cross section, minimizing the risk of tunnelling and other phenomena, which would lower the adsorption capacity of the filter. Preferably said filter construction is adapted for the easy insertion and removal of the filter units, either all at once, one at the time, or sequentially replacing these.

### Examples

### Material and Methods

Experiments in small scale were performed to compare different methods of synthesis with respect to the amounts of metal ions adsorbed by the corresponding adsorption materials. Dried and classified bark *(Pinus silvéstris)* was supplied by Sydkraft AB, Sweden. The bark was of the same quality used in cleaning oil spills and to adsorb oil from contaminated water. The bark had to be dried before sieving in order to avoid problems with very small particles (bark powder).

Chemicals: allyl bromide, formic aldehyde, sodium hydroxide, epichlorhydrin, bromine water, copper nitrate, zinc nitrate and polyethylene imine (PEI), all laboratory grade, were supplied by Inovata AB, Bromma, Sweden.

Copper was used as a test metal ion because of the possibility to quickly determine the Cu²⁺ content using an ion selective electrode. An ion selective electrode (Orion 9629BN, Thermo Electron Corporation, USA) was used, together with the copper(II) standard (0.1 M) from the same company (Article no 942906, copper(II)nitrate).

Copper(II)sulfate was used for measuring the absorption. In one experiment, zinc was used as a test substance and the analysis was performed using a spectrometer (model ICP-AES JY 2000, Yobin Yvon Ltd, UK).

In all examples the adsorption of metal ions is referred to dry bark. In all experiments 100 g of moistened bark was used. 100 g of moistened bark corresponds to about 40 g of dry bark.

In all experiments copper(II) was used as a test ion except in experiment 9. In this experiment zinc(II) nitrate was used.

### Standard Test Procedure (SIP)

200 ml of the copper(II)sulfate solution of known concentration was added to the washed bark and the mixture is shaken for 10 minutes. The mixture was poured on a Büchner funnel (diameter 10 cm) with a Munktell filter paper no 3 (diameter 9 cm) and washed with 200 ml deionised water. This was done with water suction in a 1 litre suction flask.

The copper(II) content was measured in the total amount of water in the suction flask. Normally the volume was 400 ml (measured by measuring cylinder). At the same time the copper(II) concentration was measured in the added copper(II) solution. The results were calculated as adsorbed copper / weight adsorption material.

### Results

### Example 1. Untreated bark

100 gram of moistened bark was washed and tested according to STP. Result: 69 µekv copper(II) /g was adsorbed which corresponds to published results.

### Example 2. Mannich type reaction

100 g bark was mixed with 600 ml formic aldehyde solution (1%) and 20 g PEI was added. The mixture was shaken over night and washed. Analysis according to the Standard Test Procedure showed that only a small amount of copper(II) had been adsorbed.

### Example 3. Mannich type reaction

100 g bark was mixed with 200 ml formic aldehyde solution (1%) and 10 g PEI was added. The adsorption was tested according to the Standard Test Procedure. 214 ml copper(II)sulfate solution (4.95 mM) was added and shaken for 10 minutes. After water suction the solution in the suction flask was bright blue, which shows that PEI is only loosely adsorbed to the bark and released when copper interacts with PEI.

### Example 4.

To 100 g moistened bark 64 g sodium hydroxide (6.24 mmol/g) and 100 g water was added. 5 g PEI dissolved in 50 ml water was added, and the mixture allowed to react overnight. Adsorption was tested according to the Standard Test Procedure. The adsorption was shown to be similar as for untreated bark, see Example 1.

### Example 5.

64 g of sodium hydroxide (6.24 mmol/g) and 100 g of water was added to 100 g moistened bark. To this mixture 5 g PEI dissolved in 50 ml water and 10 ml ECH was immediately added. The reaction mixture was placed in a shaking apparatus overnight, washed to neutral pH with deionised water and filtrated. Adsorption was tested according to the Standard Test Procedure. Adsorption: 7 g/kg.

### Example 6.

Same as Example 4 but using only 1 g PEI dissolved in water and 2 ml ECH. Adsorption: 7 g/kg.

### Example 7.

100 ml water was added to 100 g bark. 10 ml saturated bromine water was than added. The yellow colour disappeared immediately. 66 g sodium hydroxide (6.24 mmol/g) and 1 g PEI was added and the mixture was placed in the shaking apparatus overnight. 2 g ECH was added and crosslinking/substitution was allowed to occur overnight, washed to neutral pH and tested according to the Standard Test Procedure. Adsorption: 8 g/kg.

### Example 8.

Example 6 was repeated but the reaction with sodium hydroxide was allowed to take place overnight before addition of the reagents. Adsorption: 12 g/kg.

### Example 9.

Derivatised bark was prepared according to Example 6. 1300 ppm of a zinc nitrate solution was added to the bark and left to stand for 10 minutes. After filtration, only 1.2 ppm of zinc could be detected.

### Example 10. Scaling up

In a scaling up experiment 250 litres (about 75 kg) of dry bark, corresponding to about 200 kg of moistened bark, was mixed with 400 litres 10 % sodium hydroxide in a 1 000 litres plastic reaction vessel. The mixture was shaken overnight (12 hours) in a shaking apparatus of own construction. The construction made it possible to achieve a homogeneous mixture. 2 kg PEI dissolved in 10 litres water was added and allowed to absorbing for 1 hour. Thereafter 4 kg ECH was added and the reaction allowed to proceed for 6 hours. The mixture was washed to almost neutral pH with metal ion free water on a large screen. 100 g of the final product was tested according to the Standard Test Procedure, showing the same result as in Example 8.

In summary, the experiments show that a superior adsorption material is made available, and that this material can be produced from widely available and relatively inexpensive raw materials. It has earlier been shown, in association with the cleaning of oil spills, that sieved bark can be stored, handled and used in large scale operations.

## Claims

1. A process for the manufacture of an adsorption material, based on a cellulosic raw material containing functional groups and pseudofunctional allylic groups, **characterized in that** said material is subjected to a pre-treatment involving an aqueous bromine solution at neutral pH, to form bromohydrin groups, which in turn combines covalently with the amino groups of the polyethyleneimine added at basic pH, and the addition of a crosslinking agent.

2. The process according to claim 1, wherein said cellulosic raw material is particulate tree bark.

3. The process according to claim 1, wherein the pH and the duration of said steps are chosen to expose carboxyl groups on the cellulose fibres of the cellulosic raw material.

4. The process according to claim 1, wherein said crosslinking agent is epichlorohydrin.

5. The process according to claim 1 or 2, wherein the cellulosic raw material has a particle size in the interval of 1 to 10 mm.

6. An adsorption material obtainable through a process according to any of the claims 1 - 5.

7. A filter unit containing an adsorption material according to claim 6.

8. A filter containing one or more filter units according to claim 7.

9. A process for the removal of heavy metals from aqueous solutions, **characterized in that** an adsorption material according to claim 6 is used.

10. A process according to claim 9, **characterized in that** a filter unit according to claim 7 is used.

11. A process according to claim 10, **characterized in that** a filter according to claim 8 is used.

## Patentansprüche

1. Verfahren zur Herstellung eines Adsorptionsmaterials, das auf einem zellulosehaltigen Ausgangsmaterial basiert, das funktionelle Gruppen und pseudofunktionelle Allylgruppen enthält, **dadurch gekennzeichnet, dass** das Material eine Vorbehandlung bei neutralem pH-Wert erfährt, die eine wässrige Brom lösung umfasst, um Bromhydringruppen zu bilden, die wiederum eine kovalente Bindung mit den Aminogruppen von Polyethylenimin eingeht, das bei einem basischen pH-Wert zugesetzt wird, und ein Vernetzungsmittel zugesetzt wird.

2. Verfahren nach Anspruch 1, wobei das zellulosehaltige Ausgangsmaterial partikelförmige Baumrinde ist.

3. Verfahren nach Anspruch 1, wobei der pH-Wert und die Dauer der Schritte gewählt werden, um Carboxylgruppen auf den Zellulosefasern des zellulosehaltigen Ausgangsmaterials freizulegen.

4. Verfahren nach Anspruch 1, wobei das Vernetzungsmittel Epichlorhydrin ist.

5. Verfahren nach Anspruch 1 oder 2, wobei das zellulosehaltige Ausgangsmaterial eine Partikelgröße im Bereich von 1 bis 10 mm aufweist.

6. Adsorptionsmaterial, herstellbar durch ein Verfahren nach einem der Ansprüche 1 bis 5.

7. Filtereinheit, enthaltend ein Adsorptionsmaterial nach Anspruch 6.

8. Filter, enthaltend eine oder mehrere Filtereinheiten nach Anspruch 7.

9. Verfahren zum Entfernen von Schwermetallen aus wässrigen Lösungen, **dadurch gekennzeichnet, dass** ein Adsorptionsmaterial nach Anspruch 6 verwendet wird.

10. Verfahren nach Anspruch 9, **dadurch gekennzeichnet, dass** eine Filtereinheit nach Anspruch 7 verwendet wird.

11. Verfahren nach Anspruch 10, **dadurch gekennzeichnet, dass** ein Filter nach Anspruch 8 verwendet wird.

## Revendications

1. Procédé de production d'un matériau d'adsorption, basé sur une matière cellulosique brute contenant des groupes fonctionnels et des groupes allyliques pseudo-fonctionnels, **caractérisé en ce que** ladite matière est soumise à un prétraitement impliquant une solution de brome aqueuse à pH neutre, pour former des groupes bromhydrine, qui à leur tour, se combinent par covalence avec les groupes amino de la polyéthylèneimine ajoutée à pH basique, et à l'ajout d'un agent de réticulation.

2. Procédé selon la revendication 1, dans lequel ladite matière cellulosique brute est de l'écorce d'arbre sous forme de particules.

3. Procédé selon la revendication 1, dans lequel le pH et la durée desdites étapes sont choisis pour exposer des groupes carboxyles sur les fibres de cellulose de la matière cellulosique brute.

4. Procédé selon la revendication 1, dans lequel ledit agent de réticulation est de l'épichlorhydrine.

5. Procédé selon la revendication 1 ou 2, dans lequel la matière cellulosique brute présente une taille de particule dans la plage de 1 à 10 mm.

6. Matériau d'adsorption pouvant être obtenu par un procédé selon l'une quelconque des revendications 1 à 5.

7. Unité filtrante contenant un matériau d'adsorption selon la revendication 6.

8. Filtre contenant une ou plusieurs unités filtrantes selon la revendication 7.

9. Procédé pour retirer des métaux lourds de solutions aqueuses, **caractérisé en ce qu'**un matériau d'adsorption selon la revendication 6 est utilisé.

10. Procédé selon la revendication 9, **caractérisé en ce qu'**une unité filtrante selon la revendication 7 est utilisée.

11. Procédé selon la revendication 10, **caractérisé en ce qu'**un filtre selon la revendication 8 est utilisé.
